# EUROPÄISCHE PATENTSCHRIFT

(11) **EP 2 263 863 B1**
(45) Veröffentlichungstag und Bekanntmachung des Hinweises auf die Patenterteilung: **10.08.2016**
(21) Anmeldenummer: 10006065.6
(22) Anmeldetag: 12.06.2010
(51) Int. Cl.: B29C 70/32, B29C 70/54, B29C 70/86, B29C 53/58

(54) **Verfahren zum Herstellen eines schalenfoermigen Bauteils**
Method for producing a shell-shaped component
Procédé de fabrication d'un composant en forme de coque

(30) Priorität: 16.06.2009 DE 102009024973
(43) Veröffentlichungstag der Anmeldung: 22.12.2010
(73) Patentinhaber: Frank, Egon, 97531 Theres (DE)
(72) Erfinder: Frank, Egon, 97531 Theres (DE)
(74) Vertreter: Gosdin, Michael

(56) Entgegenhaltungen:
- DE-A1- 4 009 031
- DE-A1- 10 260 115
- US-A- 3 661 670

## Beschreibung

Die Erfindung betrifft ein Verfahren zum Herstellen eines zumindest abschnittsweise schalenförmigen Bauteils, insbesondere eines Gehäuseteils, das eine Wandung aufweist, wobei die Wandung durch Aufwickeln eines mit einem adhäsiven Medium versehenen Fasermaterials auf einen sich um eine Rotationsachse drehenden Körper erzeugt wird, wobei das Verfahren die Schritte aufweist:
a) Platzieren mindestens eines Ankerelements an oder in der zumindest teilweise hergestellten Wandung;
b) Integrieren des Ankerelements in der Wandung durch weiteres Aufwickeln des mit adhäsiven Medium versehenen Fasermaterials;
c) Nach der Fertigstellung der Wandung: Anbringen eines Anbindungsbauteil an das Ankerelement.

Ein gattungsgemäßes Verfahren ist aus der US 3 661 670 A bekannt. Ähnliche und andere Lösungen zeigen die DE 40 09 031 A1 und die DE 102 60 115 A1**.**

In vielen Bereichen werden Bauteile benötigt, die eine hohe Festigkeit bei geringem Gewicht aufweisen sollen. Hierbei sind beispielsweise auch Gehäuse zu nennen, die leicht und stabil sein müssen. Unter dem Gesichtspunkt eines geringen Gewichts kommt als Material für das Bauteil Kunststoff in Frage. Dieses hat zumeist nicht die benötigte Festigkeit. Daher ist es bekannt, in das Kunststoffmaterial Verstärkungsfasern einzulagern, um die Materialfestigkeit zu erhöhen. Bekannt ist die Verwendung insbesondere von Glasfasern und Kohlenstofffasern. Als sehr vorteilhafte Fertigungsmethode für derartig faserverstärkte Bauteile ist eine Technologie bekannt, bei der lange Verstärkungsfasern um einen Bauteilgrundkörper bei Rotation des Grundkörpers gewickelt werden. Damit können Bauteile hoher Festigkeit hergestellt werden.

Dabei ist es - worauf sich auch die vorliegende Erfindung bezieht - möglich, dass alleinig Fasermaterial verarbeitet wird, d. h. abgesehen davon, dass das Fasermaterial vor seiner Aufwicklung durch ein adhäsives Medium geführt und mit diesem getränkt ist, wird das Bauteil alleinig durch das Fasermaterial gebildet, dass alternativ hierzu aber auch vorgesehen werden kann, dass das Fasermaterial in ein Kunststoffmaterial eingebettet wird.

Nachteilig ist dabei, dass zwar sehr hohe Steifigkeiten des schalenförmigen Bauteils bei geringem Gewicht auf diese Weise erreicht werden können, dass indes die Anbindung des Bauteils an ein angrenzendes Bauteil zumeist eine Schwachstelle darstellt, an der zuerst Bauteilversagen auftritt.

Der Erfindung liegt daher die Aufgabe zugrunde, ein Verfahren der eingangs genannten Art sowie ein schalenförmiges Bauteil vorzuschlagen, mit dem es möglich wird, eine hohe Festigkeit auch in dem bislang kritischen Bereich der Anbindungsstelle des schalenförmigen Bauteils an angrenzende Bauteile zu erreichen. Dabei soll dieses Ziel erreicht werden, ohne einen allzu hohen fertigungstechnischen Aufwand betreiben zu müssen.

Die Lösung dieser Aufgabe durch ein Verfahren nach Anspruch 1 zeichnet sich dadurch aus, dass das Integrieren des Ankerelements in die Wandung durch die Schritte erfolgt:
b₁) Einarbeiten einer der Form des Ankerelements entsprechenden Ausnehmung in die zumindest teilweise hergestellte Wandung;
b₂) Einsetzen des Ankerelements in die Ausnehmung.

Vorzugsweise kann vor dem Platzieren des Ankerelements an oder in der zumindest teilweise hergestellten Wandung zunächst ein erster Teil der Wandung mit einer ersten Wandstärke gewickelt werden.

Um den Wickelvorgang durch die angesetzten Ankerelemente nicht zu behindern, sieht eine spezielle Lösung vor, dass nach dem Platzieren des Ankerelements an oder in der zumindest teilweise hergestellten Wandung ein einen radialen Überstand ausgleichendes Volumenelement auf die Oberfläche der Wandung aufgesetzt wird, so dass sich ein weitgehend ungestörter Außenumfang der Wandung im Bereich des Ankerelements ergibt. Der Einsatz eines solchen Volumenelements ist aber keinesfalls zwingend. Es ist auch möglich, einen radial überstehenden Bereich konturenangepasst weiter zu umwickeln. Das Volumenelement kann dabei aus beliebigen Materialien bzw. Werkstoffen bestehen. Es kann so geformt sein, dass es sich formschlüssig in den Bereich zwischen den Ankerelementen einfügt.

Nach dem Einsetzen des Ankerelements in die Ausnehmung kann ein Befestigen des Ankerelements in der Ausnehmung erfolgen. Hierbei kommt beispielsweise das Befestigen durch Einkleben des Ankerelements in Frage.

Das genannte Einarbeiten der Ausnehmung kann durch spanendes Bearbeiten, insbesondere durch einen Fräsvorgang, erfolgen. Aber auch eine spanlose Bearbeitung ist möglich. Vorteilhafte Bearbeitungsmöglichkeiten sind auch Laserstrahl- oder Wasserstrahlschneiden.

Das Fasermaterial kann vor dem Aufwickeln durch das adhäsive Medium hindurchgeführt und mit diesem getränkt werden. Als adhäsives Medium kommt bevorzugt ein flüssiges Kunststoffmaterial, insbesondere ein Duroplast oder ein Thermoplast, zum Einsatz. Bevorzugt möglich ist auch der Einsatz von Phenolharz oder von Epoxidharzen als adhäsives Medium.

Möglich ist es aber auch, ein Fasermaterial einzusetzen, das bereits als Halbzeug mit einem entsprechenden Medium vorversorgt ist.

Weiterhin ist es möglich, dass beim Aufwickeln des Fasermaterials in dieses Energie eingeleitet wird, um das Medium in eine gewünschte Konsistenz zu bringen. Die Einleitung von Energie ist auch später zwecks Aushärtung des Mediums bzw. der Faser möglich.

Das schalenförmige Bauteil kann als zumindest abschnittsweise hohlzylindrisches Teil gefertigt werden. Möglich ist auch eine Ausbildung als zumindest abschnittsweise sphärisches, insbesondere kugelförmiges, Teil. Eine bevorzugte Ausführungsform ist es auch, dass das schalenförmige Bauteil als hohlzylindrisches oder sphärisches Bauteil mit im Querschnitt kreisförmiger oder ovaler Kontur gefertigt wird und von diesem Bauteil dann ein Umfangsabschnitt ausgeschnitten wird.

Das Anbringen des Anbindungsbauteils an das Ankerelement kann folgende Schritte umfassen:
- Freilegen des sich unter einer Schicht gewickelten Fasermaterials befindlichen Ankerelements;
- mechanisches Verbinden des Anbindungsbauteils mit dem Ankerelement.

Das Freilegen des Ankerelements kann dabei durch spanendes oder spanloses Bearbeiten, insbesondere durch einen Bohr- oder Fräsvorgang, erfolgen. Geeignet sind auch andere vorbekannte Bearbeitungsverfahren, insbesondere Laser- oder Wasserstrahlschneiden.

Das mechanische Verbinden des Anbindungsbauteils kann bevorzugt durch Schaffung einer Gewindeverbindung zwischen Ankerelement und Anbindungsbauteil erfolgen.

Das Fasermaterial ist bevorzugt als Verstärkungsfaser ausgebildet. Dabei ist insbesondere vorgesehen, dass die Verstärkungsfaser eine Glasfaser, eine Kohlenstofffaser, eine Kunststofffaser, insbesondere aus Aramid, Polyester oder einem Polymer, eine Naturfaser, insbesondere aus Sisal oder Hanf, eine Stahlfaser, eine Leichtmetallfaser, eine Keramikfaser oder eine Borfaser ist. Die Wandung des schalenförmigen Bauteils kann gemäß einer Weiterbildung neben dem Fasermaterial auch ein Kunststoffmaterial aufweisen, in das das Fasermaterial integriert bzw. inkorporiert ist.

Das Fasermaterial kann als einzelne Faser ausgebildet sein. Möglich ist es aber auch, dass das Fasermaterial als Mehrfachfaser ausgebildet ist, insbesondere als Faserband oder als Faserbandage. Hierfür können vorgefertigte Rollen als Halbzeuge zum Einsatz kommen.

Ein mit dem erfindungsgemäßen Verfahren hergestelltes schalenförmiges Bauteil, insbesondere Gehäuseteil, weist eine Wandung auf, die eine Vielzahl von Lagen eines gewickelten Fasermaterials umfasst, wobei sich die Lagen des Fasermaterials miteinander in einem adhäsiven Verbund befinden. Dieses Bauteil zeichnet sich dadurch aus, dass in das gewickelte Fasermaterial mindestens ein Ankerelement integriert ist, das mit einem Anbindungsbauteil in Verbindung steht.

Das Bauteil weist dabei bevorzugt zumindest abschnittsweise eine hohlzylindrische oder sphärische Form auf. Bei der sphärischen Form kann es sich um eine geschlossene oder fast geschlossene Form (Hohlkontur) handeln. Das Bauteil kann dabei die Form eines halben Hohlzylinders bzw. einer halben Kugelform bzw. Kugelabschnittsform aufweisen. Das Anbindungsbauteil ist beispielsweise und bevorzugt ein Befestigungsflansch. Die Verbindung zwischen dem Verankerungselement und dem Anbindungsbauteil wird vorzugsweise durch eine Schraube oder einen Bolzen hergestellt.

Ein bevorzugter Anwendungsfall des vorgeschlagenen Bauteils ist ein Gehäuse. Als Beispiel hierfür sei ein Gehäuse einer Lageranordnung genannt. Das Gehäuse weist eine sehr hohe spezifische (d. h. auf sein Gewicht bezogene) Festigkeit und Steifigkeit auf. Die Anbindung des Gehäuses - insbesondere auch die Verbindung zweier Gehäusehälften - erfolgt durch die erfindungsgemäße Vorgehensweise in sehr stabiler Weise, so dass die Anbindungsstelle keine Schwachstelle mehr darstellt.

Das vorgeschlagene Verfahren lässt sich sehr wirtschaftlich betreiben, da auf an sich bekannte Fertigungsmittel und -verfahren zurückgegriffen werden kann.

Bevorzugte Formen des schalenförmigen Bauteils sind hohlzylindrische Teile (auch mit hinterschnittenen Konturen) bzw. Umfangsabschnitte hiervon. Möglich sind auch mehreckige Strukturen, die sich durch Wickeln herstellen lassen.

Das vorgeschlagene Verfahren lässt sich nicht nur wirtschaftlicher als beispielsweise die Herstellung eines Gehäuses im Sandguss durchführen, es werden auch deutlich bessere Festigkeitseigenschaften des schalenförmigen Bauteils erreicht.

In der Zeichnung ist ein Ausführungsbeispiel der Erfindung dargestellt. Es zeigen:
- Fig. 1: schematisch den Herstellvorgang für ein schalenförmiges Bauteil aus einem Fasermaterial,
- Fig. 2a: schematisch einen Körper zum Aufwickeln des Fasermaterials, aus dem das schalenförmige Bauteil gebildet wird, in der Stirnansicht des Körpers, während eines ersten Fertigungsschritts des schalenförmigen Bauteils,
- Fig. 2b: schematisch die Herstellung eines ersten Teils der Wandung des schalenförmigen Bauteils in der Ansicht von Fig. 2a während eines zweiten Fertigungsschritts des schalenförmigen Bauteils,
- Fig. 2c: schematisch die Platzierung von Ankerelementen auf der Wandung des ersten Teils des schalenförmigen Bauteils in der Ansicht von Fig. 2a während eines dritten Fertigungsschritts des schalenförmigen Bauteils,
- Fig. 2d: schematisch das weitere Aufwickeln von Fasermaterial in der Ansicht von Fig. 2a während eines vierten Fertigungsschritts des schalenförmigen Bauteils,
- Fig. 2e: schematisch das Freilegen von Ankerelementen in der Ansicht von Fig. 2a während eines fünften Fertigungsschritts des schalenförmigen Bauteils und
- Fig. 2f: schematisch das fertige schalenförmige Bauteil in Form einer Gehäusehälfte.

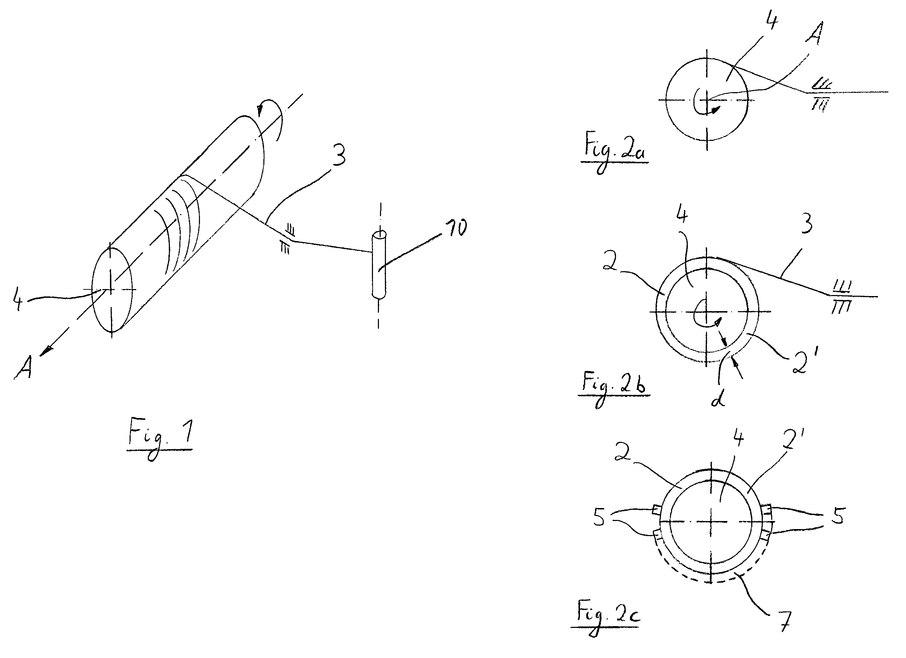

In Fig. 1 ist dargestellt, wie ein schalenförmiges Bauteil grundsätzlich gefertigt werden kann. Ein (Träger-)Körper 4 rotiert um eine Achse A. Während der Rotation wird Fasermaterial 3 in Form einer langen Faser auf den Körper 4 aufgewickelt. Das Fasermaterial 3 ist dabei auf einer Spule 10 bevorratet, die während des Aufwickelns auf den Körper 4 von dieser abgespult wird.

Nicht dargestellt ist, dass das Fasermaterial 3 vor dem Aufwickeln mit einem adhäsiven Medium versehen wird. Beispielsweise wird die Faser 3 durch einen Behälter geführt, der mit Phenolharz gefüllt ist, wodurch die Faser 3 vor dem Aufwickeln mit diesem Medium getränkt wird.

Das Fasermaterial 3 kann dabei - wie es in Fig. 1 angedeutet ist - in axialer Richtung des Körpers 4 während des Aufwickelns relativ zum Körper 4 geführt werden, so dass sich durch das axiale Hin- und Herführen eine kreuzförmige Lagenanordnung der Faser 3 ergibt. Damit kann das schalenförmige Bauteil alleinig durch das Fasermaterial gebildet werden.

Alternativ ist es auch möglich, dass das Fasermaterial 3 in eine Kunststoffmatrix eingebracht wird, die auf den Körper 4 in geeigneter Weise aufgebracht wird. Dann besteht das schalenförmige Bauteil aus dem in Kunststoffmaterial eingewickelten Fasermaterial 3.

In Fig. 2a ist dargestellt, wie auf den Körper 4 das Fasermaterials 3 aufgewickelt wird.

Nach einer gewissen Anzahl Wicklungen hat sich eine erste Schicht 2' einer Wandung 2 gebildet, die das schalenförmige Bauteil bildet. Dies ist in Fig. 2b zu sehen. Die Schicht 2' weist dabei eine Wandstärke d auf.

Anschließend wird auf die Außenumfangsfläche des ersten Teils 2' der Wandung 2 eine gewünschte Zahl von Ankerelementen 5 aufgesetzt. Diese können in geeigneter Weise fixiert, z. B. angeklebt werden. Die Ankerelemente 5 müssen im weiteren Verfahrensverlauf innig mit dem Material der Wandung verbunden werden. Hierzu wird weiteres Fasermaterial 3 auf den Körper 4 aufgewickelt und die Ankerelemente 5 damit ins Innere der Wandung integriert bzw. inkorporiert. Damit das Aufwickeln weiteren Fasermaterials 3 möglichst ungestört erfolgen kann, können Volumenelemente 7 so in den Umfangsbereich zwischen den Ankerelementen 5 eingesetzt werden, dass sich wiederum eine weitgehend ungestörte Umfangsfläche bildet, die sauber umwickelt werden kann. Eines dieser Volumenelemente 7 ist mit gestrichelten Linien in Fig. 2c skizziert.

Die Volumenelemente 7 können aus Abschnitten bzw. Segmenten eines zuvor gefertigten gewickelten Wandungsteils bestehen, d. h. aus dem Material der Wandung 2.

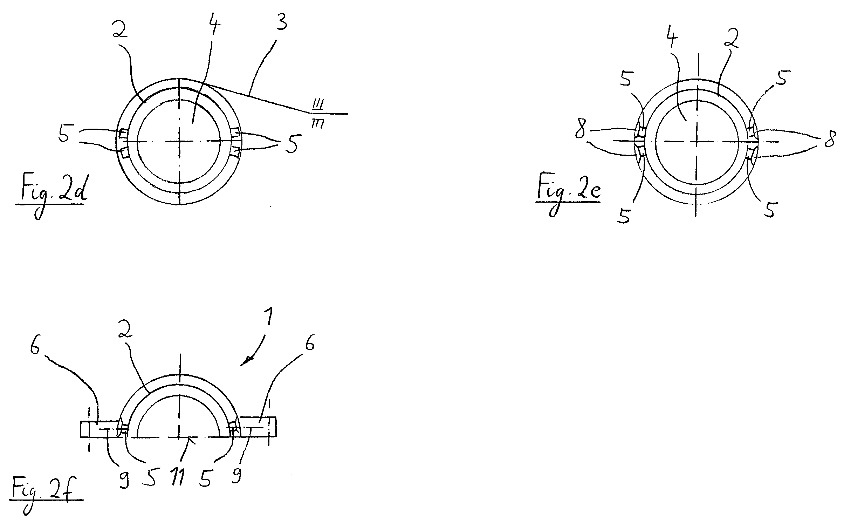

In Fig. 2d ist zu sehen, wie die Wandung 2 weiter durch Aufwickeln des Fasermaterials 3 gebildet wird. Hier ist zu erkennen, dass die Umwicklung erfolgt, bis die Ankerelemente 5 vollständig umwickelt und so in die Wandung 2 integriert sind.

Ist die Wandung 2 fertig gewickelt, d. h. hat sie die gewünschte Wanddicke, wird zur Anbringung von Anbindungsbauteilen 6 zunächst der Oberflächenbereich freigelegt, unter dem sich die Ankerelemente 5 befinden. In Fig. 2e ist skizziert, wie Ausfräsungen 8 eingebracht wurden, um die Ankerelemente 5 freizulegen und so zugänglich zu machen.

An die freigelegten Ankerelemente 5 werden schließlich - wie es aus Fig. 2f hervorgeht - Anbindungsbauteile 6 montiert, wozu eine geeignete mechanische Verbindung eingesetzt wird. Schematisch angedeutet sind in Fig. 2f Gewindeverbindungen 9, mit denen das Anbindungsbauteil 6 mit dem Ankerelement 5 fest verbunden wird. Damit ist das Bauteil 1 fertig gestellt. Möglich wäre es beispielsweise aber auch, dass das Anbindungsbauteil 6 am Ankerelement 5 festgeklebt wird.

In Fig. 2f ist im Übrigen zu sehen, dass das vorgefertigte Wandungsteil an einer Trennebene 11 vom Rest des gewickelten Teils abgetrennt wurde, z. B. durch einen Schneidprozess, wobei sich Wasserstrahlschneiden besonders bewährt hat. Hiermit können z. B. zwei Gehäusehälften aus einem Bauteil gefertigt werden, wie es oben beschrieben wurde.

Die Anbindungsbauteile 6 können dabei eine beliebige Ausgestaltung haben, beispielsweise als Flanschelemente, die dem Festlegen des schalenförmigen Körpers an einem Anbauteil dienen. Genauso sind Gewindeelemente oder Buchsen möglich.

Das Bauteil 1 stellt somit ein Hybridbauteil dar, da die leichte und feste schalenförmige Wandung mit einem Anbindungsbauteil (zumeist aus Stahl) verbunden ist. Auch die Ankerelemente 5 bestehen zumeist aus Stahl, wenngleich durchaus auch andere Materialien hierfür in Frage kommen.

Der (Wickelträger-)Körper 4 kann dabei eine so hohe Fertigungstoleranz aufweisen, dass sich ein sehr präzise geformter Wandabschnitt nach dem Entfernen des Körpers 4 ergibt.

Als Ankerelemente können neben den oben genannten Elementen (die im Wesentlichen aus einem massiven Block bestehen) auch Lochband, Bandstahl, Bandgewebe, Geflecht, Lochreihen, Faserverbundeinlagen etc. zum Einsatz kommen.

Damit wird es möglich, große punktuelle Kräfte, wie sie beispielsweise vorliegen, wenn über eine Schraube eine Spannkraft eingebracht wird, zu verteilen und gleichmäßig in das Bauteil 1 einzuleiten.

Es ist auch möglich, dass mit der vorgesehenen Fertigungsweise weitere Bauteile bzw. Komponenten mit in die Wandung integriert werden, die bei der späteren Benutzung des Bauteils 1 zum Einsatz kommen, wie z. B. Sensoren etc.

Hinsichtlich der zum Einsatz kommenden Fasern sei noch erwähnt, dass neben den genannten Arten von Fasern auch solche aus Metall, insbesondere aus Stahl, zum Einsatz kommen können, was im Falle von Gehäuseteilen zu einer sehr hohen Festigkeit führt.

Vorgesehen kann auch werden, dass optional weitere Bauteile oder Bauelemente mit in das Bauteil integriert bzw. inkorporiert werden. Hier seien exemplarisch Sensorelemente genannt. Auch andere Elemente sind denkbar.

Bei diesen weiteren Bauteilen kann es sich beispielsweise auch um Volumenelemente handeln, die zunächst einen gewissen Raum einnehmen, später dann aber wieder entfernt werden, so dass ein genau definierter Hohlraum im Bauteil verbleibt.

### Bezugszeichenliste:

- 1: Bauteil
- 2: Wandung
- 2': erster Teil der Wandung
- 3: Fasermaterial
- 4: Körper
- 5: Ankerelement
- 6: Anbindungsbauteil
- 7: Volumenelement
- 8: Ausfräsung
- 9: Gewindeverbindung
- 10: Spule
- 11: Trennebene

- A: Rotationsachse
- d: Wandstärke

## Patentansprüche

1. Verfahren zum Herstellen eines zumindest abschnittsweise schalenförmigen Bauteils (1), insbesondere eines Gehäuseteils, das eine Wandung (2) aufweist, wobei die Wandung durch Aufwickeln eines mit einem adhäsiven Medium versehenen Fasermaterials (3) auf einen sich um eine Rotationsachse (A) drehenden Körper (4) erzeugt wird, wobei das Verfahren die Schritte aufweist:
a) Platzieren mindestens eines Ankerelements (5) an oder in der zumindest teilweise hergestellten Wandung (2);
b) Integrieren des Ankerelements (5) in der Wandung (2) durch weiteres Aufwickeln des mit adhäsiven Medium versehenen Fasermaterials (3);
c) Nach der Fertigstellung der Wandung (2): Anbringen eines Anbindungsbauteil (6) an das Ankerelement (5),
**dadurch gekennzeichnet,**
**dass** das Integrieren des Ankerelements (5) in die Wandung (2) durch die Schritte erfolgt:
b₁) Einarbeiten einer der Form des Ankerelements (5) entsprechenden Ausnehmung in die zumindest teilweise hergestellte Wandung (2);
b₂) Einsetzen des Ankerelements (5) in die Ausnehmung.

2. Verfahren nach Anspruch 1, **dadurch gekennzeichnet, dass** vor dem Platzieren des Ankerelements (5) an oder in der zumindest teilweise hergestellten Wandung (2) zunächst ein erster Teil (2') der Wandung (2) mit einer ersten Wandstärke (d) gewickelt wird.

3. Verfahren nach Anspruch 1 oder 2, **dadurch gekennzeichnet, dass** nach dem Platzieren des Ankerelements (5) an oder in der zumindest teilweise hergestellten Wandung (2) ein einen radialen Überstand ausgleichendes Volumenelement (7) auf die Oberfläche der Wandung (2) aufgesetzt wird, so dass sich ein weitgehend ungestörter Außenumfang der Wandung (2) im Bereich des Ankerelements (5) ergibt.

4. Verfahren nach einem der Ansprüche 1 bis 3, **dadurch gekennzeichnet, dass** nach dem Einsetzen des Ankerelements (5) in die Ausnehmung gemäß Schritt b₂) ein Befestigen des Ankerelements (5) in der Ausnehmung erfolgt, wobei das Befestigen insbesondere ein Einkleben des Ankerelements (5) ist.

5. Verfahren nach einem der Ansprüche 1 bis 4, **dadurch gekennzeichnet, dass** das Einarbeiten der Ausnehmung gemäß Schritt b₁) durch spanendes Bearbeiten, insbesondere durch einen Fräsvorgang, erfolgt.

6. Verfahren nach einem der Ansprüche 1 bis 5, **dadurch gekennzeichnet, dass** das Fasermaterial (3) vor dem Aufwickeln durch das adhäsive Medium hindurchgeführt und mit diesem getränkt wird, wobei als adhäsives Medium insbesondere ein flüssiges Kunststoffmaterial, insbesondere ein Duroplast oder ein Thermoplast, oder ein Phenolharz verwendet wird.

7. Verfahren nach einem der Ansprüche 1 bis 6, **dadurch gekennzeichnet, dass** das Anbringen des Anbindungsbauteils (6) an das Ankerelement (5) gemäß Schritt c) von Anspruch 1 die Schritte umfasst:
c₁) Freilegen (8) des sich unter einer Schicht gewickelten Fasermaterials befindlichen Ankerelements (5);
c₂) mechanisches Verbinden des Anbindungsbauteils (6) mit dem Ankerelement (5).

8. Verfahren nach Anspruch 7, **dadurch gekennzeichnet, dass** das Freilegen des Ankerelements (5) durch spanendes Bearbeiten, insbesondere durch einen Bohr- oder Fräsvorgang, erfolgt.

9. Verfahren nach Anspruch 7 oder 8, **dadurch gekennzeichnet, dass** das mechanische Verbinden des Anbindungsbauteils (6) durch Schaffung einer Gewindeverbindung (9) zwischen Ankerelement (5) und Anbindungsbauteil (6) erfolgt.

10. Verfahren nach einem der Ansprüche 1 bis 9, **dadurch gekennzeichnet, dass** das Fasermaterial (3) als Verstärkungsfaser ausgebildet ist, wobei die Verstärkungsfaser (3) insbesondere eine Glasfaser, eine Kohlenstofffaser, eine Kunststofffaser, insbesondere aus Aramid, Polyester oder einem Polymer, eine Naturfaser, insbesondere aus Sisal oder Hanf, eine Stahlfaser, eine Leichtmetallfaser, eine Keramikfaser oder eine Borfaser ist.

11. Verfahren nach einem der Ansprüche 1 bis 10, **dadurch gekennzeichnet, dass** die Wandung (2) neben dem Fasermaterial ein Kunststoffmaterial aufweist, in das das Fasermaterial (3) integriert ist.

## Claims

1. Method for the production of a component part (1) which is at least partially shell-shaped, especially of a housing part, which comprises a wall (2), wherein the wall is produced by winding of a fiber material (3) which is supplied with an adhesive medium on a body (4) which is rotating around an axis of rotation (A), wherein the method comprises the steps of:
a) Placing of at least one anchor element (5) at or in the at least partially produced wall (2);
b) Integrating of the anchor element (5) in the wall (2) by further winding of the fiber material (3) which is supplied with adhesive medium;
c) After completion of the wall (2): Attaching of a connection part (6) at the anchor element (5),
**characterized in that**
the integration of the anchor element (5) in the wall (2) takes place by the steps:
b₁) Machining of a recess in the at least partially produced wall (2) which recess corresponds to the shape of the anchor element (5);
b₂) Inserting of the anchor element (5) into the recess.

2. Method according to claim 1, **characterized in that** prior to the placing of the anchor element (5) at or in the at least partially produced wall (2) at first a first part (2') of the wall (2) is wound with a first wall thickness (d).

3. Method according to claim 1 or 2, **characterized in that** after the placing of the anchor element (5) at or in the at least partially produced wall (2) a volume element (7) is put onto the surface of the wall (2) which volume element (7) compensates a radial protrusion so that a substantially unhindered outer circumference of the wall (2) results in the region of the anchor element (5).

4. Method according to one of claims 1 to 3, **characterized in that** after the placing of the anchor element (5) into the recess according to step b₂) a fixation of the anchor element (5) in the recess takes place, wherein the fixation is especially a gluing of the anchor element (5).

5. Method according to one of claims 1 to 4, **characterized in that** the machining of the recess according to step b₁) takes place by shape cutting, especially by a milling process.

6. Method according to one of claims 1 to 5, **characterized in that** the fiber material (3) is guided prior to the winding through the adhesive medium and is soaked with it, wherein as adhesive medium is used especially a liquid plastic material, especially a thermoset material or a thermoplast, or a phenolic resin.

7. Method according to one of claims 1 to 6, **characterized in that** the attaching of the connection part (6) at the anchor element (5) according to step c) of claim 1 comprises the steps of:
c₁) Baring (8) of the anchor element (5) which is arranged below a layer of wound fiber material;
c₂) Mechanically connecting the connection part (6) with the anchor element (5).

8. Method according to claim 7, **characterized in that** the baring of the anchor element (5) takes place by shape cutting, especially by a boring or milling process.

9. Method according to claim 7 or 8, **characterized in that** the mechanically connecting of the connection part (6) takes place by creation of a threaded connection (9) between the anchor element (5) and the connection part (6).

10. Method according to one of claim 1 to 9, **characterized in that** the fiber material (3) is designed as reinforcement fiber, wherein the reinforcement fiber (3) is especially a glass fiber, a carbon fiber, a plastic fiber, especially made of aramid, polyester or of a polymer, a natural fiber, especially made of sisal or hemp bred, a steel fiber, a light metal fiber, a ceramic fiber or a boron fiber.

11. Method according to one of claim 1 to 10, **characterized in that** the wall (2) comprises beside the fiber material a plastic material in which the fiber material (3) is integrated.

## Revendications

1. Procédé de fabrication d'un composant au moins localement en forme de coque (1), en particulier d'une partie de boîtier, qui présente une paroi (2), dans lequel la paroi est produite par enroulement d'un matériau fibreux (3) pourvu d'un milieu adhésif sur un corps (4) tournant autour d'un axe de rotation (A), dans lequel le procédé comprend les étapes suivantes:
a) placer au moins un élément d'ancrage (5) sur ou dans la paroi au moins partiellement fabriquée (2);
b) intégrer l'élément d'ancrage (5) dans la paroi (2) par nouvel enroulement du matériau fibreux (3) pourvu d'un milieu adhésif;
c) après achèvement de la paroi (2): poser un composant de liaison (6) sur l'élément d'ancrage (5),
**caractérisé en ce que** l'intégration de l'élément d'ancrage (5) dans la paroi (2) est effectuée par les étapes suivantes:
b₁) usiner un évidement correspondant à la forme de l'élément d'ancrage (5) dans la paroi au moins partiellement fabriquée (2);
b₂) insérer l'élément d'ancrage (5) dans l'évidement.

2. Procédé selon la revendication 1, **caractérisé en ce qu'**avant le placement de l'élément d'ancrage (5) sur ou dans la paroi au moins partiellement fabriquée (2), on enroule d'abord une première partie (2') de la paroi (2) avec une première épaisseur de paroi (d).

3. Procédé selon la revendication 1 ou 2, **caractérisé en ce qu'**après le placement de l'élément d'ancrage (5) sur ou dans la paroi au moins partiellement fabriquée (2), on applique un élément de volume (7) compensant un dépassement radial sur la surface de la paroi (2), de telle manière qu'il en résulte une périphérie extérieure largement intacte de la paroi (2) dans la région de l'élément d'ancrage (5).

4. Procédé selon l'une quelconque des revendications 1 à 3, **caractérisé en ce qu'**après l'insertion de l'élément d'ancrage (5) dans l'évidement selon l'étape b₂), on opère une fixation de l'élément d'ancrage (5) dans l'évidement, la fixation étant notamment un collage de l'élément d'ancrage (5).

5. Procédé selon l'une quelconque des revendications 1 à 4, **caractérisé en ce que** l'on effectue l'usinage de l'évidement selon l'étape b₁) par un usinage avec enlèvement de copeaux, en particulier par une opération de fraisage.

6. Procédé selon l'une quelconque des revendications 1 à 5, **caractérisé en ce que** le matériau fibreux (3) est conduit avant l'enroulement à travers le milieu adhésif et imprégné avec celui-ci, dans lequel on utilise comme milieu adhésif en particulier un matériau plastique liquide, en particulier un plastique thermodurcissable ou un plastique thermoplastique.

7. Procédé selon l'une quelconque des revendications 1 à 6, **caractérisé en ce que** la pose du composant de liaison (6) sur l'élément d'ancrage (5) selon l'étape c) de la revendication 1 comprend les étapes suivantes:
c₁) dégagement (8) de l'élément d'ancrage (5) situé sous une couche de matériau fibreux enroulé;
c₂) liaison mécanique du composant de liaison (6) avec l'élément d'ancrage (5).

8. Procédé selon la revendication 7, **caractérisé en ce que** l'on effectue le dégagement de l'élément d'ancrage (5) par usinage avec enlèvement de copeaux, en particulier par une opération de forage ou de fraisage.

9. Procédé selon la revendication 7 ou 8, **caractérisé en ce que** l'on effectue la liaison mécanique du composant de liaison (6) en créant une liaison vissée (9) entre l'élément d'ancrage (5) et le composant de liaison (6).

10. Procédé selon l'une quelconque des revendications 1 à 9, **caractérisé en ce que** le matériau fibreux (3) est réalisé en tant que fibre de renforcement, dans lequel la fibre de renforcement (3) est en particulier une fibre de verre, une fibre de carbone, une fibre synthétique, en particulier en aramide, en polyester ou en un polymère, une fibre naturelle, en particulier en sisal ou en chanvre, une fibre d'acier, une fibre de métal léger, une fibre céramique ou une fibre de bore.

11. Procédé selon l'une quelconque des revendications 1 à 10, **caractérisé en ce que** la paroi (2) présente, en plus du matériau fibreux, un matériau plastique, dans lequel le matériau fibreux (3) est intégré.
